# EUROPEAN PATENT APPLICATION

(11) **EP 4 224 555 A1**
(43) Date of publication of application: **09.08.2023**
(21) Application number: 21875476.0
(22) Date of filing: 27.09.2021
(51) Int. Cl.: H01M 4/13, H01M 10/052, H01M 10/0568

(54) **LITHIUM SECONDARY BATTERY**

(30) Priority: 30.09.2020 JP 2020166137
(71) Applicant: Panasonic Intellectual Property Management Co., Ltd., Osaka-shi, Osaka 540-6207 (JP)
(72) Inventor: MIYAMAE, Ryohei, Osaka-shi, Osaka 540-6207 (JP); KANO, Akira, Osaka-shi, Osaka 540-6207 (JP)
(74) Representative: Novagraaf International SA
(86) International application number: PCT/JP2021/035242
(87) International publication number: WO 2022/071174

(57) **Abstract**

A lithium secondary battery includes: a positive electrode that absorbs lithium ions during discharging and releases the lithium ions during charging; a negative electrode on which lithium metal is deposited during charging and from which the lithium metal dissolves during discharging; and a non-aqueous electrolyte that has lithium ion conductivity. A surface of the negative electrode is covered with a protective layer that contains a resin material and inorganic particles having a density of 6 g/cm³ or more.

## Description

### [Technical Field]

The present disclosure relates to a lithium secondary battery.

### [Background Art]

Lithium ion batteries are known as high-capacity non-aqueous electrolyte secondary batteries. The capacity of a lithium ion battery can be increased by, for example, using graphite and an alloy-type active material, such as a silicon compound, in combination as a negative electrode active material. However, the increase in the capacity of a lithium ion battery is approaching the limit.

Lithium secondary batteries (lithium metal secondary batteries) are promising as non-aqueous electrolyte secondary batteries superior in capacity to lithium ion batteries. In a lithium secondary battery, lithium metal is deposited on the negative electrode during charging, and the lithium metal dissolves and is released as lithium ions into the non-aqueous electrolyte during discharging. The lithium metal tends to be deposited in a dendritic shape during charging, and the amount of expansion of the negative electrode during charging is large.

Patent Literature 1 proposes setting the ten-point average roughness (Rz) of a surface of the negative electrode (negative electrode current collector) of a lithium secondary battery, on which lithium metal is deposited, to 10 µm or less. In this case, local deposition of lithium metal and consequent growth of dendrites are suppressed.

### [Citation List]

### [Patent Literature]

[Patent Literature 1] Japanese Laid-Open Patent Publication No. 2001-243957

### [Summary of Invention]

It is difficult to control the manner of deposition of lithium metal, and the formation and growth of dendrites are not sufficiently suppressed with the method described in Patent Literature 1.

Lithium metal deposited on the negative electrode during charging is covered with a surface film that is derived from a component of the non-aqueous electrolyte, but the strength of the surface film is low, and dendrites of the lithium metal penetrate through the surface film. Dendrites that have penetrated through the surface film come into contact with the non-aqueous electrolyte, which may cause a side reaction and degrade cycle characteristics.

An aspect of the present disclosure relates to a lithium secondary battery including: a positive electrode that absorbs lithium ions during discharging and releases the lithium ions during charging; a negative electrode on which lithium metal is deposited during charging and from which the lithium metal dissolves during discharging; and a non-aqueous electrolyte that has lithium ion conductivity, wherein a surface of the negative electrode is covered with a protective layer, the protective layer contains a resin material and inorganic particles, and the inorganic particles have a density of 6 g/cm³ or more.

According to the present disclosure, degradation of cycle characteristics of a lithium secondary battery is suppressed.

### [Brief Description of Drawings]

FIG. 1 is a schematic longitudinal cross-sectional view of a lithium secondary battery according to an embodiment of the present disclosure.
FIG. 2 is an enlarged view of an essential part of an example of an electrode group shown in FIG. 1.
FIG. 3 is an enlarged view of an essential part of another example of the electrode group shown in FIG. 1.

### [Description of Embodiments]

A lithium secondary battery according to the present disclosure includes: a positive electrode that absorbs lithium ions during discharging and releases the lithium ions during charging; a negative electrode on which lithium metal is deposited during charging and from which the lithium metal dissolves during discharging; and a non-aqueous electrolyte that has lithium ion conductivity. A surface of the negative electrode is covered with a protective layer that contains a resin material and inorganic particles, and the inorganic particles have a density of 6 g/cm³ or more.

The surface of the negative electrode is covered with the protective layer. That is, lithium metal deposited on the negative electrode is covered with the protective layer containing the resin material, and contact between the lithium metal and the non-aqueous electrolyte is suppressed. Moreover, the protective layer contains the inorganic particles having a density of 6 g/cm³ or more, and therefore, the strength of the protective layer is improved, and dendrites of the lithium metal are kept from penetrating through the protective layer. Therefore, the occurrence of a side reaction due to contact between the lithium metal and the non-aqueous electrolyte is sufficiently suppressed, and degradation of cycle characteristics due to the side reaction is suppressed.

The resin material and the inorganic particles are mixed in the protective layer. Therefore, the protective layer tends to have good lithium ion conductivity, and lithium ions move smoothly between the negative electrode and the non-aqueous electrolyte via the protective layer during charging and discharging.

It is preferable that the ratio of the density of the inorganic particles to the density of the resin material is 3.5 or more. It is thought that when this ratio between the densities is as large as 3.5 or more, the inorganic particles are deposited forming a thin dense layer during formation of the protective layer, and a film that has a uniform thickness can be formed. Therefore, maldistribution of the inorganic particles due to agglomeration thereof is suppressed in directions extending along the surface of the protective layer, variation in the strength of the protective layer in those directions is suppressed, and reliability of the strength of the protective layer is improved.

The inorganic particles contain an inorganic material (for example, a metal oxide, a metal hydroxide, a metal composite oxide, a metal nitride, a metal carbide, or a metal fluoride). Specific examples of the inorganic material include copper oxide, bismuth oxide, tungsten oxide, indium oxide, and silver oxide. One type of inorganic particle (inorganic material) may be used alone, or two or more types of inorganic particles (inorganic materials) may be used in combination. In particular, it is preferable that the inorganic particles include at least one type of particle selected from the group consisting of copper oxide particles and bismuth oxide particles. In this case, it is easy to make the inorganic particles have a density as high as 6 g/cm³ or more, and it is easy to adjust the ratio of the density of the inorganic particles to the density of the resin material to 3.5 or more. It is easy to uniformly disperse the inorganic particles in the directions extending along the surface of the protective layer. That is, a protective layer that has high strength is likely to be obtained, and reliability of the strength of the protective layer tends to be improved. Also, a protective layer that has good lithium ion conductivity is likely to be obtained.

Examples of the resin material include fluorine-containing polymers (fluorocarbon resins), polyolefin resins, acrylic resins, silicone resins, epoxy resins, polyimides, polyamide imides, polyvinyl alcohols, polyacrylic acids, polymethacrylic acids, polyethylene oxides, and polystyrenes. A resin material may be used alone, or two or more resin materials may be used in combination. In particular, it is preferable that the resin material includes a fluorine-containing polymer from the viewpoint of thermal stability and chemical stability. It is preferable that the fluorine-containing polymer includes at least one selected from the group consisting of polyvinylidene fluoride (PVDF), polytetrafluoroethylene (PTFE), a copolymer of vinylidene fluoride (VDF) and hexafluoropropylene (HFP), and a copolymer of VDF and tetrafluoroethylene (TFE). Among these, PVDF is more preferable. The use of PVDF is advantageous because, when PVDF is used, it is easy to adjust the ratio of the density of the inorganic particles to the density of the resin material to 3.5 or more to increase the strength of the protective layer, and the resin material has an appropriate degree of swelling with respect to the solvent of the non-aqueous electrolyte, and is easy to process. Due to having the appropriate degree of swelling, the protective layer tends to have good lithium ion conductivity.

The resin material may have a weight-average molecular weight of 500,000 or more, 700,000 or more and 1,300,000 or less, or 800,000 or more and 1,000,000 or less. When the weight-average molecular weight of the resin material is within the above range, the resin material can be easily mixed with the inorganic particles, and a protective layer that has good flexibility is likely to be obtained. When the negative electrode is wound in a process for manufacturing the battery, the protective layer is likely to follow the negative electrode, and the state where the surface of the negative electrode is covered with the protective layer is likely to be maintained. The protective layer tends to have high strength and an appropriate degree of swelling in a well-balanced manner. Note that the weight-average molecular weight of the resin material can be measured through gel permeation chromatography (GPC).

The inorganic particles may have a particle diameter of 1 nm or more and 100 nm or less, or 5 nm or more and 50 nm or less. In general, particles that have a particle diameter within the above range tend to agglomerate, but agglomeration of the inorganic particles is suppressed because the inorganic particles have a density as high as 6 g/cm³ or more. When the inorganic particles having a particle diameter within the above range are uniformly dispersed in the directions extending along the surface of the protective layer, the protective layer tends to have good lithium ion conductivity. Note that the particle diameter of the inorganic particles can be determined by obtaining a cross-sectional image of the protective layer on the surface of the negative electrode using a scanning electron microscope (SEM), measuring areas of 20 to 50 inorganic particles arbitrarily selected in the cross-sectional image, determining diameters of circles (equivalent circle diameters) corresponding to those areas, and calculating the average value of those diameters.

The mass proportion of the inorganic particles in the protective layer may be 50 mass% or less, 35 mass% or less, or 5 mass% or more and 20 mass% or less. When the mass proportion of the inorganic particles in the protective layer is within the above range, the protective layer has sufficient flexibility, sufficient strength, and sufficient lithium ion conductivity.

From the viewpoint of suppressing contact between the lithium metal and the non-aqueous electrolyte and suppressing penetration of dendrites through the protective layer, the protective layer may have a thickness of 0.1 µm or more and 5 µm or less, or 0.5 µm or more and 2 µm or less. Note that the thickness of the protective layer can be determined by obtaining a cross-sectional image of the protective layer on the surface of the negative electrode using a scanning electron microscope (SEM), measuring thicknesses at arbitrarily selected 10 points on the protective layer using the cross-sectional image, and calculating the average value of those thicknesses.

It is preferable that a space in which lithium metal is deposited is provided between the negative electrode and the positive electrode. The space can be formed by providing a spacer between the negative electrode and the positive electrode. From the viewpoint of improving productivity, for example, the spacer may be formed using the same material as the material of the protective layer (the mixture of the resin material and the inorganic particles). It is also possible to increase the thickness of a portion of the protective layer during formation of the protective layer, and use the portion having the increased thickness as the spacer. That is, the spacer and the protective layer may be formed as one piece. For example, the protective layer may be formed by applying a protective layer forming ink, which will be described later, to a surface of a negative electrode current collector by using a coater (for example, a gravure coater), and a line-shaped protrusion (spacer) may be formed by further applying the same protective layer forming ink in a line shape to the protective layer using a dispenser. From the viewpoint of improving productivity, for example, the protective layer and the protrusion may be dried at the same time after forming the protrusion.

The protective layer can be formed by applying the protective layer forming ink to the surface of the negative electrode current collector, and drying the ink, for example. The ink can be applied using a bar coater, an applicator, or a gravure coater, for example. The protective layer forming ink can be prepared by adding the resin material and the inorganic particles to a liquid component and mixing these materials, for example. As the liquid component, it is possible to use a component in which the inorganic particles can be dispersed and the resin material can dissolve, and examples of the liquid component include N-methyl-2-pyrrolidone (NMP), dimethyl ether (DME), and tetrahydrofuran (THF).

The following describes the components of the lithium secondary battery in further detail.

### [Negative electrode]

The negative electrode includes a negative electrode current collector. In the lithium secondary battery, lithium metal is deposited on the surface of the negative electrode during charging. Specifically, lithium ions contained in the non-aqueous electrolyte receive electrons on the negative electrode during charging and become lithium metal, which is deposited on the surface of the negative electrode. The lithium metal deposited on the surface of the negative electrode dissolves as lithium ions in the non-aqueous electrolyte during discharging. Note that the lithium ions contained in the non-aqueous electrolyte may either be derived from a lithium salt added to the non-aqueous electrolyte or supplied from a positive electrode active material during charging, or both. When lithium metal is not deposited on the surface of the negative electrode current collector, the protective layer covers the surface of the negative electrode current collector. When lithium metal is deposited on the surface of the negative electrode current collector, the protective layer covers the surface of the lithium metal.

The negative electrode may include a lithium ion absorbing layer (a layer that develops capacity through absorption and release of lithium ions by a negative electrode active material (for example, graphite)) supported by the negative electrode current collector. In this case, the open circuit potential of the negative electrode in a fully-charged state may be 70 mV or less with respect to lithium metal (lithium dissolution/deposition potential). When the open circuit potential of the negative electrode in the fully-charged state is 70 mV or less with respect to lithium metal, lithium metal is present on the surface of the lithium ion absorbing layer in the fully-charged state. That is, the negative electrode develops capacity through deposition and dissolution of the lithium metal. When lithium metal is not deposited on the surface of the lithium ion absorbing layer, the protective layer covers the surface of the lithium ion absorbing layer. When lithium metal is deposited on the surface of the lithium ion absorbing layer, the protective layer covers the surface of the lithium metal.

Here, the fully-charged state is a state where the battery has been charged to 0.98×C or more, where C represents the rated capacity of the battery, for example. The open circuit potential of the negative electrode in the fully-charged state can be measured by disassembling the fully-charged battery in an argon atmosphere, taking out the negative electrode, and assembling a cell using lithium metal as a counter electrode. A non-aqueous electrolyte used in the cell may have the same composition as the non-aqueous electrolyte included in the disassembled battery.

The lithium ion absorbing layer is obtained by forming a negative electrode mixture that contains a negative electrode active material into a layer. The negative electrode mixture may also contain a binder, a thickener, an electrically conductive material, or the like in addition to the negative electrode active material.

Examples of the negative electrode active material include carbon materials, Si-containing materials, and Sn-containing materials. The negative electrode may contain one negative electrode active material or a combination of two or more negative electrode active materials. Examples of the carbon materials include graphite, easily-graphitizable carbon (soft carbon), and hardly-graphitizable carbon (hard carbon).

Examples of the conductive material include carbon materials. Examples of the carbon materials include carbon black, acetylene black, Ketjen Black, carbon nanotubes, and graphite.

Examples of the binder include fluorocarbon resins, polyacrylonitrile, polyimide resins, acrylic resins, polyolefin resins, and rubbery polymers. Examples of the fluorocarbon resins include polytetrafluoroethylene and polyvinylidene fluoride.

It is sufficient that the negative electrode current collector is in the form of an electrically conductive sheet. The conductive sheet may be a foil, film, or the like.

The negative electrode current collector (conductive sheet) is made of an electrically conductive material other than lithium metal and lithium alloys. The conductive material may be a metal material such as a metal or an alloy. The conductive material preferably does not react with lithium. Specifically, a material that forms neither an alloy nor an intermetallic compound with lithium is preferred. Examples of such a conductive material include copper (Cu), nickel (Ni), iron (Fe), an alloy of one or more of these metal elements, and graphite having a basal plane predominately exposed on its surface. Examples of the alloy include a copper alloy and stainless steel (SUS). In particular, copper and/or a copper alloy is preferred because of its high electrical conductivity.

The negative electrode current collector may have any thickness; the thickness is, for example, 5 µm or more and 300 µm or less.

### [Positive electrode]

The positive electrode includes, for example, a positive electrode current collector and a positive electrode mixture layer supported on the positive electrode current collector. The positive electrode mixture layer contains, for example, a positive electrode active material, an electrically conductive material, and a binder. The positive electrode mixture layer may be formed on one surface or two surfaces of the positive electrode current collector. The positive electrode can be obtained by, for example, applying a positive electrode mixture slurry that contains a positive electrode active material, an electrically conductive material, and a binder to two surfaces of the positive electrode current collector, drying the applied film, and then rolling the dry applied film.

The positive electrode active material absorbs and releases lithium ions. Examples of the positive electrode active material include a lithium-containing transition metal oxide, a transition metal fluoride, a polyanion, a fluorinated polyanion, and a transition metal sulfide. In particular, a lithium-containing transition metal oxide is preferred in terms of its low production cost and high average discharge voltage.

Lithium contained in the lithium-containing transition metal oxide is released as lithium ions from the positive electrode during charging, and is deposited as lithium metal on the negative electrode or the negative electrode current collector. During discharging, the lithium metal dissolves from the negative electrode and lithium ions are released and absorbed by a composite oxide in the positive electrode. That is, lithium ions involved in charging and discharging are mostly derived from a solute in the non-aqueous electrolyte and the positive electrode active material.

Examples of a transition metal element contained in the lithium-containing transition metal oxide include Sc, Ti, V, Cr, Mn, Fe, Co, Ni, Cu, Y, Zr, and W. The lithium-containing transition metal oxide may contain one transition metal element or two or more transition metal elements. The transition metal element may be Co, Ni, and/or Mn. The lithium-containing transition metal oxide can contain one or more typical elements, as needed. Examples of typical elements include Mg, Al, Ca, Zn, Ga, Ge, Sn, Sb, Pb, and Bi. The typical element may be Al, for example.

The lithium-containing transition metal oxide is preferably a composite oxide that contains Co, Ni, and/or Mn as a transition metal element(s) and Al as an optional component, and has a crystal structure like that of rock-salt having a layered structure, in view of achieving a high capacity. In this case, in the lithium secondary battery, a molar ratio mLi/mM between the total amount mLi of lithium present in the positive and negative electrodes and the amount mM of metal M other than lithium present in the positive electrode is set to 1.1 or less, for example.

The binder, the conductive material, and the like may be those listed as examples in the description of the negative electrode, for example. The shape and thickness of the positive electrode current collector can be selected from shapes of a positive electrode current collector and a range of the thickness of a positive electrode current collector.

The positive electrode current collector (conductive sheet) may be made of, for example, a metal material including Al, Ti, Fe, or the like. The metal material may be Al, an Al alloy, Ti, a Ti alloy, an Fe alloy, or the like. The Fe alloy may be stainless steel (SUS).

The positive electrode current collector may have any thickness; the thickness is, for example, 5 µm or more and 300 µm or less.

### [Separator]

A porous sheet that has ion permeability and electrically insulating properties is used as a separator. The porous sheet may be, for example, a microporous thin film, a woven fabric, or a nonwoven fabric. The separator may be made of any material; the material may be a polymer material. Examples of the polymer material include olefin resins, polyamide resins, and cellulose. Examples of the olefin resins include polyethylene, polypropylene, and an ethylene-propylene copolymer. The separator may contain an additive, if necessary. The additive is an inorganic filler, for example.

The separator may have any thickness; the thickness is, for example, 5 µm or more and 20 µm or less, and preferably 10 µm or more and 20 µm or less.

### [Non-aqueous electrolyte]

The non-aqueous electrolyte having lithium ion conductivity includes, for example, a non-aqueous solvent, and lithium ions and anions dissolved in the non-aqueous solvent. The non-aqueous electrolyte may be a liquid or a gel.

The liquid non-aqueous electrolyte can be prepared by dissolving a lithium salt in the non-aqueous solvent. When the lithium salt is dissolved in the non-aqueous solvent, lithium ions and anions are produced.

The gel non-aqueous electrolyte includes a lithium salt and a matrix polymer, or includes a lithium salt, a non-aqueous solvent, and a matrix polymer. The matrix polymer is, for example, a polymer material that forms a gel by absorbing the non-aqueous solvent. Examples of the polymer material include a fluorocarbon resin, an acrylic resin, and a polyether resin.

The lithium salt or anions may be any known lithium salt or anions that are used for non-aqueous electrolytes for lithium secondary batteries. Specific examples thereof include BF₄⁻, ClO₄⁻, PF₆⁻, CF₃SO₃⁻, CF₃CO₂⁻, imide anions, and oxalate complex anions. Examples of the imide anions include N(SO₂CF₃)₂⁻and N(CₘF₂ₘ₊₁SO₂)ₓ(CₙF₂ₙ₊₁SO₂)_{y}⁻, where m and n are independently 0 or an integer of 1 or more, x and y are independently 0, 1, or 2, and x+y = 2. The oxalate complex anions may contain boron and/or phosphorus. Examples of the oxalate complex anions include bis(oxalato)borate anions, difluoro(oxalato)borate anions: BF₂(C₂O₄)⁻, PF₄(C₂O₄)⁻, and PF₂(C₂O₄)₂⁻. The non-aqueous electrolyte may include one of these anions, or two or more of them.

From the viewpoint of suppressing dendritic deposition of lithium metal, the non-aqueous electrolyte preferably includes at least oxalate complex anions, in particular, oxalate complex anions containing fluorine, such as BF₂(C₂O₄)⁻. The oxalate complex anions containing fluorine interact with lithium to make lithium metal more likely to be deposited uniformly in a fine particulate state. Therefore, local deposition of lithium metal can be more easily suppressed. If the manner of deposition of lithium metal is controlled to some extent with use of the oxalate complex anions, the protective layer more effectively exhibits its function of suppressing contact between lithium metal and the non-aqueous electrolyte. The oxalate complex anions containing fluorine may be used in combination with one or more other anions, for example, PF₆⁻ and/or imide anions.

Examples of the non-aqueous solvent include esters, ethers, nitriles, amides, and halogen substituted derivatives of these. The non-aqueous electrolyte may include one of these non-aqueous solvents, or two or more of them. Examples of the halogen substituted derivatives include fluorides.

Examples of the esters include carbonic esters and carboxylic acid esters. Examples of cyclic carbonic esters include ethylene carbonate, propylene carbonate, and fluoroethylene carbonate (FEC). Examples of chain carbonic esters include dimethyl carbonate (DMC), ethyl methyl carbonate (EMC), and diethyl carbonate. Examples of cyclic carboxylic acid esters include γ-butyrolactone and γ-valerolactone. Examples of chain carboxylic acid esters include ethyl acetate, methyl propionate, and methyl fluoropropionate.

Examples of the ethers include cyclic ethers and chain ethers. Examples of the cyclic ethers include 1,3-dioxolane, 4-methyl-1,3-dioxolane, tetrahydrofuran, and 2-methyltetrahydrofuran. Examples of the chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The lithium salt concentration in the non-aqueous electrolyte is, for example, 0.5 mol/L or more and 3.5 mol/L or less. The anion concentration in the non-aqueous electrolyte may be set to 0.5 mol/L or more and 3.5 mol/L or less. The oxalate complex anion concentration in the non-aqueous electrolyte may be set to 0.05 mol/L or more and 1 mol/L or less.

The non-aqueous electrolyte may contain an additive. The additive may form a surface film on the negative electrode. When the surface film derived from the additive is formed on the negative electrode, the dendrite formation and growth tend to be suppressed. Examples of the additive include vinylene carbonate, FEC, and vinyl ethyl carbonate (VEC).

### [Lithium secondary battery]

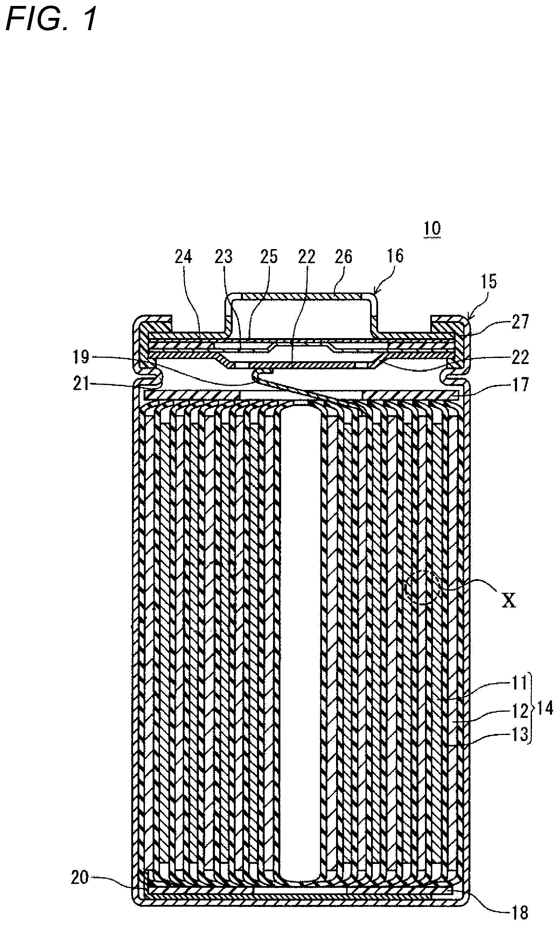

The following describes a configuration of a lithium secondary battery according to the present disclosure with reference to the drawings, with a cylindrical battery having a wound electrode group taken as an example. FIG. 1 is a longitudinal cross-sectional view of a lithium secondary battery 10, which is an example of the present embodiment.

The lithium secondary battery 10 is a cylindrical battery that includes a cylindrical battery case, a wound electrode group 14 housed in the battery case, and a non-aqueous electrolyte. The battery case includes a case main body 15, which is a bottomed cylindrical metal container, and a sealing body 16 that seals an opening of the case main body 15. The case main body 15 has an annular step portion 21 formed by partially pressing the sidewall of the case main body from the outside in the vicinity of the opening. The sealing body 16 is supported on the opening-side surface of the step portion 21. A gasket 27 is placed between the case main body 15 and the sealing body 16 to secure the hermeticity of the battery case. Inside the case main body 15, electrically insulating plates 17 and 18 are placed respectively at two ends of the electrode group 14 in the winding axis direction.

The sealing body 16 includes a filter 22, a lower valve body 23, an electrically insulating member 24, an upper valve body 25, and a cap 26. The cap 26 is disposed outside the case main body 15, and the filter 22 is disposed inside the case main body 15. Center portions of the lower valve body 23 and the upper valve body 25 are connected to each other, and the insulating member 24 is interposed between peripheral portions of the lower valve body 23 and the upper valve body 25. Peripheral portions of the filter 22 and the lower valve body 23 are connected to each other. Peripheral portions of the upper valve body 25 and the cap 26 are connected to each other. The lower valve body 23 is provided with an air vent hole. When the internal pressure of the battery case rises due to abnormal heat generation or other events, the upper valve body 25 bulges toward the cap 26 away from the lower valve body 23, which breaks electrical connection between the lower valve body 23 and the upper valve body 25. When the internal pressure further rises, the upper valve body 25 ruptures to let gas escape through an opening provided in the cap 26.

The electrode group 14 includes a positive electrode 11, a negative electrode (negative electrode current collector) 12, and a separator 13. The positive electrode 11, the negative electrode 12, and the separator 13 interposed therebetween all have band-like shapes and are wound spirally together such that the width direction of each of them is parallel with the winding axis. The insulating plates 17 and 18 are placed respectively at two ends in the axial direction of the electrode group 14.

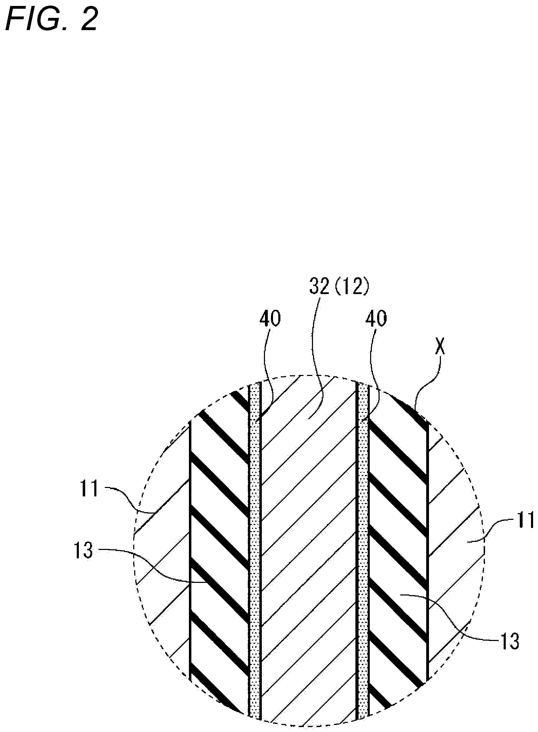

Here, FIG. 2 is an enlarged view of an essential part of an example of the electrode group shown in FIG. 1. FIG. 2 is a schematic enlarged view showing a region X surrounded by a broken line in FIG. 1 in a state where lithium metal is not deposited on a surface of a negative electrode current collector.

As shown in FIG. 2, the positive electrode 11 includes a positive electrode current collector and a positive electrode mixture layer. The positive electrode 11 is electrically connected, via a positive electrode lead 19, to the cap 26 that serves as a positive electrode terminal. One end of the positive electrode lead 19 is connected to the positive electrode 11 at somewhere (where the positive electrode current collector is exposed) around its center in the longitudinal direction, for example. The other end of the positive electrode lead 19 led out from the positive electrode 11 is passed through a through hole provided in the insulating plate 17 and welded to the inner surface of the filter 22.

The negative electrode 12 includes a negative electrode current collector 32, and a surface of the negative electrode current collector 32 is covered with a protective layer 40. The protective layer 40 is made of a mixture of a resin material and inorganic particles having a density of 6 g/cm³ or more. The negative electrode 12 is electrically connected, via a negative electrode lead 20, to the case main body 15 that serves as a negative electrode terminal. One end of the negative electrode lead 20 is connected to the negative electrode 12 at its end in the longitudinal direction (where the negative electrode current collector 32 is exposed), for example, and the other end of the negative electrode lead 20 is welded to the inner bottom surface of the case main body 15. Lithium metal is deposited on the surface of the negative electrode current collector 32 during charging, and the surface of the lithium metal is covered with the protective layer 40.

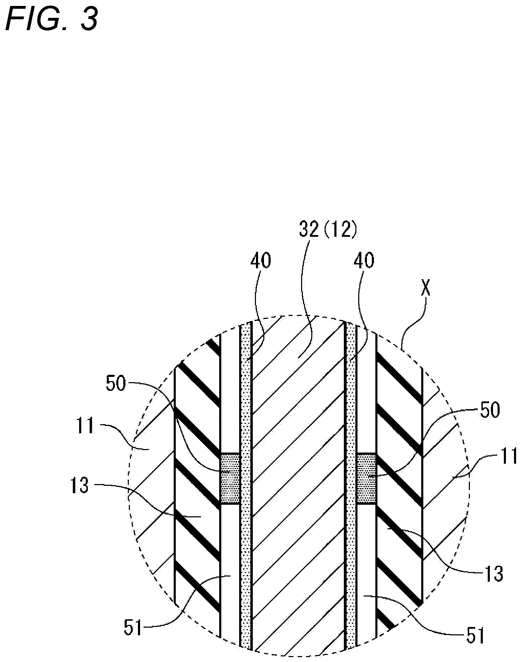

Here, FIG. 3 is an enlarged view of an essential part of another example of the electrode group shown in FIG. 1. FIG. 3 is a schematic enlarged view showing the region X surrounded by the broken line in FIG. 1 in a state where lithium metal is not deposited on the surface of the negative electrode current collector. Portions that are the same as those shown in FIG. 2 are denoted by the same reference numerals as those used in FIG. 2, and descriptions thereof are omitted.

As shown in FIG. 3, a spacer 50 is provided between the negative electrode 12 having the protective layer 40 on its surface and the separator 13. The spacer 50 is formed as a line-shaped protrusion extending along the longitudinal direction of the separator 13. The height of the spacer 50 (line-shaped protrusion) from the protective layer 40 is, for example, 10 µm or more and 100 µm or less. The spacer 50 (line-shaped protrusion) has a width of 200 µm or more and 2000 µm or less. The spacer 50 may be made of the same material as the protective layer 40, and the spacer 50 and the protective layer 40 may be formed as one piece. A plurality of line-shaped protrusions may be provided in parallel with each other at predetermined intervals. As shown in FIG. 3, when lithium metal is not deposited on the surface of the negative electrode current collector 32, there is a space 51 between the negative electrode 12 and the separator 13. Lithium metal that is deposited on the surface of the negative electrode current collector 32 during charging is stored in the space 51 between the negative electrode 12 and the separator 13 while being subjected to a pressing force applied from the separator 13.

Since the lithium metal is stored in the space 51 between the negative electrode 12 and the separator 13, apparent changes in the volume of the electrode group associated with the deposition of lithium metal during charge-discharge cycles can be reduced. Accordingly, stress applied to the negative electrode current collector 32 can also be suppressed. Moreover, since the separator 13 applies pressure to the lithium metal stored between the negative electrode 12 and the separator 13, the lithium metal is deposited in a controlled manner and is unlikely to be isolated, and a reduction in charge-discharge efficiency can be suppressed.

In the illustrated example, the cross-sectional shape of the spacer 50 is a rectangle. However, embodiments of the present disclosure are not limited to such a configuration, and the cross-sectional shape may be, for example, a trapezoid, a rectangle including a curved line forming at least one corner, an ellipse, or a portion of an ellipse. In the illustrated example, the spacer 50 is provided between the negative electrode 12 and the separator 13. However, embodiments of the present disclosure are not limited to such a configuration, and the spacer may be provided between the positive electrode and the separator, or between the positive electrode and the separator and between the negative electrode and the separator.

Although the illustrated example is a cylindrical lithium secondary battery including a wound electrode group, the shape and the like of the lithium secondary battery is not limited thereto, and may be selected according to its use and the like from various shapes such as cylindrical, coin, square, sheet, and flat shapes. The electrode group also may take any form, and may be in the form of a stack. The components of the lithium secondary battery other than the electrode group and the non-aqueous electrolyte may have any known configuration.

### [Examples]

The lithium secondary battery according to the present disclosure will be described in more detail with reference to Examples and Comparative Examples. However, the present disclosure is not limited to the following Examples.

### «Example 1»

### Production of positive electrode

A lithium-containing transition metal oxide (NCA: positive electrode active material) having a layered rock-salt structure and containing Li, Ni, Co, and Al such that the molar ratio of Li to the total of Ni, Co, and Al was 1.0, acetylene black (AB: conductive material), and polyvinylidene fluoride (PVDF: binder) were mixed at a mass ratio of NCA:AB:PVDF = 95:2.5:2.5, to which N-methyl-2-pyrrolidone (NMP) was added in an appropriate amount and stirred to prepare a positive electrode mixture slurry.

The prepared positive electrode mixture slurry was applied to two surfaces of an Al foil (positive electrode current collector), dried, and then the resulting applied film of the positive electrode mixture was rolled using a roller. Lastly, the resultant stack of the positive electrode current collector and the positive electrode mixture was cut into a predetermined electrode size to obtain a positive electrode in which a positive electrode mixture layer was formed on two surfaces of the positive electrode current collector.

### Production of negative electrode having protective layers on its surfaces

A band-shaped electrolytic copper foil (thickness: 15 µm) was prepared as a negative electrode current collector. To prepare a protective layer forming ink, 80 parts by mass of PVDF (weight-average molecular weight: 800,000 to 1,000,000, density: 1.78 g/cm³) used as a resin material, 20 parts by mass of CuO particles (average particle diameter: 60 nm, density: 6.3 g/cm³) used as inorganic particles, and NMP used as a dispersion medium were mixed. The protective layer forming ink was applied to two surfaces of the negative electrode current collector, and dried to form protective layers (thickness: 2 µm).

### Preparation of non-aqueous electrolyte

Ethylene carbonate (EC) and dimethyl carbonate (DMC) were mixed at a volume ratio of EC:DMC = 30:70. LiPF₆ and LiBF₂(C₂O₄) were dissolved in the resultant mixed solvent at concentrations of 1 mol/L and 0.1 mol/L, respectively, to prepare a liquid non-aqueous electrolyte.

### Production of battery

One end of a positive electrode lead made of aluminum was welded to the current collector in the positive electrode. One end of a negative electrode lead made of nickel was welded to the current collector in the negative electrode. The positive electrode and the negative electrode were spirally wound in an inert gas atmosphere with a separator (microporous film) made of polyethylene interposed therebetween, to form an electrode group. Lithium contained in the electrode group was all derived from the positive electrode. Therefore, a molar ratio mLi/mM of a total amount mLi of lithium present in the positive and negative electrodes to an amount mM of metal M (here, Ni, Co, and Al) present in the positive electrode was 1.0.

The electrode group was housed in a pouch-like outer case formed of a laminate sheet including an Al layer, and the non-aqueous electrolyte was injected into the outer case. Thereafter, the outer case was sealed to complete a lithium secondary battery Al. Note that the other end of the positive electrode lead and the other end of the negative electrode lead were exposed to the outside from the outer case while the electrode group was housed in the outer case.

### [Evaluation]

The battery A1 was subjected to a charge-discharge cycle test. In the charge-discharge cycle test, the battery was charged under conditions described below in a constant-temperature bath at 25°C, left to stand for 20 min, and then discharged under conditions described below. This cycle was repeated 200 cycles.

### Charging

Constant-current charging was performed until the battery voltage reached 4.3 V at a current of 10 mA per unit area (square centimeters) of the electrode, and then constant-voltage charging was performed at a voltage of 4.3 V until the current value per unit area of the electrode reached 1 mA.

### Discharging

Constant-current discharging was performed until the battery voltage reached 3 V at a current of 10 mA per unit area of the electrode.

The rate (C₂/C₁×100) of a discharge capacity C₂ at the 200th cycle to a discharge capacity C₁ at the 1st cycle was determined as a capacity retention rate (%).

### «Example 2»

A lithium secondary battery A2 was produced and evaluated in the same manner as in Example 1, except that Bi₂O₃ particles (average particle diameter: 80 nm, density: 8.9 g/cm³) were used as inorganic particles instead of CuO particles.

### <<Comparative Example 1>>

A lithium secondary battery B 1 was produced and evaluated in the same manner as in Example 1, except that the protective layers were not formed on the surfaces of the negative electrode current collector.

### <<Comparative Example 2>>

A PVDF layer forming ink was prepared by mixing polyvinylidene fluoride (PVDF) used as a resin material and N-methyl-2-pyrrolidone (NMP) used as a dispersion medium. The PVDF layer forming ink was applied to the surfaces of the negative electrode current collector, and dried to form PVDF layers (thickness: 2 µm). A lithium secondary battery B2 was produced and evaluated in the same manner as in Example 1, except that the PVDF layers were formed instead of the protective layers on the surfaces of the negative electrode current collector as described above.

### <<Comparative Example 3>>

A lithium secondary battery B3 was produced and evaluated in the same manner as in Example 1, except that SiO₂ particles (average particle diameter: 60 nm, density: 2.65 g/cm³) were used as inorganic particles instead of CuO particles.

### <<Comparative Example 4>>

A lithium secondary battery B4 was produced and evaluated in the same manner as in Example 1, except that Al₂O₃ particles (average particle diameter: 50 nm, density: 3.6 g/cm³) were used as inorganic particles instead of CuO particles.

Evaluation results of the batteries A1, A2, and B1 to B4 are shown in Table 1.

**[Table 1]**

| Battery No. | Protective layer | | | | Capacity retention rate (%) at 200th cycle |
|---|---|---|---|---|---|
| | Resin material | Inorganic particles | | Ratio of density of inorganic particles to density of resin material | |
| | | Material | Density (g/cm³) | | |
| B1 | - | - | - | - | 91.2 |
| B2 | PVDF | - | - | - | 90.8 |
| B3 | PVDF | SiO₂ | 2.65 | 1.49 | 90.4 |
| B4 | PVDF | Al₂O₃ | 3.6 | 2.02 | 83.3 |
| A1 | PVDF | CuO | 6.3 | 3.54 | 92.4 |
| A2 | PVDF | Bi₂O₃ | 8.9 | 5.00 | 94.2 |

The batteries A1 and A2 had higher capacity retention rates than the batteries B1 to B4. In the batteries A1 and A2, inorganic particles having a density of 6 g/cm³ or more were contained in the protective layers, and the ratio of the density of the inorganic particles to the density of the resin material was 3.5 or more.

The battery B1 was not provided with the protective layers, and therefore, cycle characteristics were degraded. In the battery B2, inorganic particles were not contained in the protective layers, and therefore, cycle characteristics were degraded. In the batteries B3 and B4, the inorganic particles contained in the protective layers had a low density, and contact between dendrites of lithium metal and the non-aqueous electrolyte was not suppressed, and therefore, cycle characteristics were degraded.

### [Industrial Applicability]

The lithium secondary battery of the present disclosure is applicable to electronic devices such as cellular phones, smart phones, and tablet terminals, electric vehicles including hybrids and plug-in hybrids, and home storage battery systems combined with a solar cell.

### [Reference Signs List]

- 10: lithium secondary battery
- 11: positive electrode
- 12: negative electrode
- 13: separator
- 14: electrode group
- 15: case main body
- 16: sealing body
- 17, 18: insulating plate
- 19: positive electrode lead
- 20: negative electrode lead
- 21: step portion
- 22: filter
- 23: lower valve body
- 24: insulating member
- 25: upper valve body
- 26: cap
- 27: gasket
- 32: negative electrode current collector
- 40: protective layer
- 50: spacer
- 51: space

## Claims

1. A lithium secondary battery comprising:
a positive electrode that absorbs lithium ions during discharging and releases the lithium ions during charging:
a negative electrode on which lithium metal is deposited during charging and from which the lithium metal dissolves during discharging: and
a non-aqueous electrolyte that has lithium ion conductivity,
wherein a surface of the negative electrode is covered with a protective layer,
the protective layer contains a resin material and inorganic particles, and
the inorganic particles have a density of 6 g/cm³ or more.

2. The lithium secondary battery according to claim 1,
wherein a ratio of the density of the inorganic particles to a density of the resin material is 3.5 or more.

3. The lithium secondary battery according to claim 1 or 2,
wherein the inorganic particles include at least one type selected from the group consisting of copper oxide particles and bismuth oxide particles.

4. The lithium secondary battery according to any one of claims 1 to 3,
wherein the resin material includes a fluorine-containing polymer.

5. The lithium secondary battery according to any one of claims 1 to 4,
wherein the resin material has a weight-average molecular weight of 500,000 or more.

6. The lithium secondary battery according to any one of claims 1 to 5,
wherein the inorganic particles have a particle diameter of 1 nm or more and 100 nm or less.

7. The lithium secondary battery according to any one of claims 1 to 6,
wherein the inorganic particles are contained in an amount of 35 mass% or less in the protective layer.

8. The lithium secondary battery according to any one of claims 1 to 7,
wherein the protective layer has a thickness of 0.1 µm or more and 5 µm or less.

9. The lithium secondary battery according to any one of claims 1 to 8,
wherein the non-aqueous electrolyte includes lithium ions and anions, and
the anions include oxalate complex anions.

10. The lithium secondary battery according to claim 9,
wherein the oxalate complex anions include difluoro(oxalato)borate anions.

11. The lithium secondary battery according to any one of claims 1 to 10,
wherein there is a space in which the lithium metal is deposited between the negative electrode and the positive electrode.
